# EUROPÄISCHE PATENTSCHRIFT

(11) **EP 1 817 814 B1**
(45) Veröffentlichungstag und Bekanntmachung des Hinweises auf die Patenterteilung: **18.02.2009**
(21) Anmeldenummer: 05850243.6
(22) Anmeldetag: 08.12.2005
(51) Int. Cl.: H01M 8/06, H01M 8/04, F23N 5/12

(54) **VERFAHREN ZUR BESTIMMUNG EINER LUFTZAHL BEI EINEM BRENNER FÜR EIN BRENNSTOFFZELLENHEIZGERÄT SOWIE BRENNSTOFFZELLENHEIZGERÄT**
METHOD FOR DETERMINING AN AIR RATIO IN A BURNER FOR A FUEL CELL HEATER, AND FUEL CELL HEATER
PROCEDE DE DETERMINATION D'UN COEFFICIENT D'AIR SUR UN BRULEUR D'UN DISPOSITIF DE CHAUFFAGE DE PILE A COMBUSTIBLE ET DISPOSITIF DE CHAUFFAGE DE PILE A COMBUSTIBLE

(30) Priorität: 10.12.2004 DE 102004059494
(43) Veröffentlichungstag der Anmeldung: 15.08.2007
(73) Patentinhaber: BAXI INNOTECH GmbH, 20539 Hamburg (DE)
(72) Erfinder: SCHILLING, Lutz, 70374 Stuttgart (DE); KLOSE, Philipp, 22769 Hamburg (DE); HOFFMANN, Christian, 22119 Hamburg (DE)
(74) Vertreter: Schildberg, Peter
(86) Internationale Anmeldenummer: PCT/EP2005/013175
(87) Internationale Veröffentlichungsnummer: WO 2006/061228

(56) Entgegenhaltungen:
- DE-A1- 10 059 892
- DE-A1- 10 324 315
- DE-A1- 19 941 978

## Beschreibung

Die vorliegende Erfindung betrifft ein Verfahren zur Bestimmung einer Luftzahl bei einem Brenner für ein Brennstoffzellenheizgerät ebenso wie ein Brennstoffzellenheizgerät.

Brennstoffzellen, wie beispielsweise Polymermembranbrennstoffzellen, sind hinreichend bekannt. Brennstoffzellenheizgeräte zur dezentralen Energieversorgung werden über einen Gasanschluß mit Erdgas versorgt, wobei der Wasserstoff aus wasserstoffhaltigen Verbindungen des Erdgases reformiert wird. In einem Reformator werden in Anwesenheit eines Katalysators die· Kohlenwasserstoffe (CₙHₘ) des Erdgases endotherm unter Zugabe von Wasserdampf reformiert, wobei Kohlendioxid (CO₂) und Wasserstoff (H₂) entsteht.

Das Reformat enthält auch Reste von Kohlenmonoxid (CO), welches in einer nachgeschalteten Gasfeinreinigung unter Zugabe von Sauerstoff (O₂) exotherm selektiv oxidiert wird. Dabei entsteht Kohlendioxid (CO₂) und Wasser (H₂O). Für die endotherme Dampfreformation wird ein Gasbrenner eingesetzt.

Derartige Reformatoren sind beispielsweise in EP 0 922 666 B1, DE 102 13 326 A1 und EP 1094 031 beschrieben.

Aus DE 196 18 573 C1 ist ein Verfahren und eine Einrichtung zum Betrieb eines Gasgebläsebrenners bekannt, bei dem das als Lambda bezeichnete Gas-LuftVerhältnis innerhalb eines vorgegebenen Intervalls gehalten wird. Zur Regelung der Luftzahl ist im Flammenbereich des Brenners eine Ionisationselektrode angeordnet, die an eine Auswerteschaltung für einen zwischen Brenner und Ionisationselektrode fließenden Strom angeschlossen ist. Die Auswerteschaltung bildet aus einem von der Verbrennung abhängigen Ionisationsstrom eine Ionisationsspannung, die an eine Regelschaltung angelegt wird. Die Ionisationsspannung wird dann abhängig davon, ob ein höherkälorisches Gas oder ein niederkalorisches Gas verbrannt wird, zur Regelung eines Gas- und/oder Luftvolumenstroms in dem Brenner verwendet.

Aus EP 1 186 831 B1 ist ein Luftzahlregler für einen Brenner bekannt, bei dem mit einem Sensor die Qualität der Verbrennung erfaßt wird. Ein Sensorauswerter erzeugt ein Sensorsignal, das an einer Steuereinheit anliegt. In der Steuereinheit sind Kenndaten zu dem Verhalten der Stellglieder gespeichert. Wenn während des Startvorgangs des Brenners oder aus anderen Gründen das Ionisationssignal nicht repräsentativ für die Verbrennung ist, wird das Luft-Gasverhältnis nicht geregelt, sondern gesteuert. Nach einer Vorspülzeit wird dann ein fiktives Stellsignal vorgegeben, um möglichst schnell in die Nähe des optimal geregelten Werts zu gelangen.

Der Erfindung liegt die Aufgabe zugrunde, ein Verfahren zur Bestimmung einer Luftzahl bei einem Brenner für ein Brennstoffzellenheizgerät bereitzustellen, das auch während der Startphase des Systems und bei Änderung der Gaszusammensetzung eine zuverlässige Steuerung eines Brenners in einem Brennstoffzellenheizgerät erlaubt.

Erfindungsgemäß wird die Aufgabe durch ein Verfahren mit Merkmalen aus Anspruch 1 sowie durch ein Brennstoffzellenheizgerät mit den Merkmalen aus Anspruch 9 gelöst.

Das erfindungsgemäße Verfahren betrifft die Bestimmung der Luftzahl bei einem Brenner für ein Brennstoffzellenheizgerät. Der Brenner ist mit einem Ionisationssensor im Flammenbereich versehen und wird durch mindestens zwei unterschiedliche Gase gespeist. Eines dieser Gase wird dem Brenner aus einer Gasaufbereitung zugeführt und ist in seiner Zusammensetzung zeitlich veränderlich, beispielsweise während eines Startvorgangs des Geräts. Ein Meßsignal des Ionisationssensors wird abhängig von einer oder mehreren Zustandsgrößen der Gasaufbereitung in einen Ist-Wert für die Luftzahl umgerechnet. Das veränderliche Gas stammt im wesentlichen aus der Gasaufbereitung. Der Erfindung liegt die Erkenntnis zugrunde, daß die von einer Ionisationselektrode erfaßten Signale bei einer entsprechenden Berücksichtigung mindestens einer weiteren Zustandsgröße der Gasaufbereitung zuverlässige und reproduzierbare Signale für den Ist-Wert der Luftzahl liefern, auch wenn mit einem veränderlichen Gasgemisch gearbeitet wird. Im Gegensatz zu den bekannten Brennern mit Ionisationssensor erfolgt bei dem erfindungsgemäßen Verfahren eine Auswertung des Meßsignals, um einen Ist-Wert für die aktuelle Luftzahl bei einer veränderlichen Gasmischung zu gewinnen. Bevorzugt wird der so ermittelte Ist-Wert der Luftzahl an eine Regelung für das Luft-/Gasgemisch in dem Brenner weitergeleitet.

Als Zustandsgröße bei der Ermittlung des Ist-Werts der Luftzahl wird die Zusammensetzung des veränderlichen Gases aus der Gasaufbereitung berücksichtigt, insbesondere der Methangehalt des Gases. In einer bevorzugten Ausgestaltung wird bei dem erfindungsgemäßen Verfahren der Methangehalt abhängig von der Temperatur eines Reformers bestimmt. Im Ergebnis führt das erfindungsgemäße Verfahren also dazu, daß sich aus dem Meßsignal des Ionisationssensors und einem Temperaturwert für den Reformer zuverlässig ein Lambda-Ist-Wert bestimmen läßt. Als weitere Zustandsgröße der Gasaufbereitung, die für die Bestimmung des Ist-Wertes der Luftzahl herangezogen werden kann, ist der N₂-Anteil aus einer Gasfeinreinigung sowie die zu erwartende Brenngasmenge ebenso wie der Wasserstoffumsatz in der Brennstoffzelle bzw. den Brennstoffzellen geeignet.

Die vorliegende Aufgabe wird ebenfalls durch ein Brennstoffzellenheizgerät gelöst, mit einem Brenner, der einen Ionisationssensor im Flammenbereich aufweist. Dem Brenner werden zwei verschiedene Gase zugeführt, wobei eines dieser Gase aus der Gasaufbereitung stammt und in seiner Zusammensetzung veränderlich ist. Eine Signalauswerteeinheit wertet das Meßsignal des Ionisationssensors aus und ermittelt einen Ist-Wert für die Luftzahl, wobei an der Signalauswerteeinheit Signale für die Größe einer oder mehrerer Zustandsgrößen der Gasaufbereitung anliegen. Das erfindungsgemäße Brennstoffzellenheizgerät erlaubt es, den Ionisationssensor in dem Brenner, der beispielsweise auch zur Flammenüberwachung eingesetzt werden kann, als Sensor für den Ist-Wert der Luftzahl zu verwenden. Hierdurch können für eine zuverlässige Ist-Wert-Bestimmung der Luftzahl beispielsweise Sauerstoffsensoren im Abgaskanal, Temperatursensoren auf der Brenneroberfläche oder aufwendige UV-Sensoren in der Brennkammer vermieden werden.

In einer bevorzugten Weiterbildung besitzt das Brennstoffzellenheizgerät eine Regelungseinheit, die abhängig von dem ermittelten Ist-Wert für die Luftzahl eine der Verbrennung zugeführte Luftmenge und/oder eine zugeführte Gasmenge einstellt.

In einer bevorzugten Weiterführung besitzt das Brennstoffzellenheizgerät in einem Reformer mindestens einen Temperatursensor zur Bestimmung eines Methangehalts in dem veränderlichen Gas. Die Größe des Temperaturwerts liegt als Eingangssignal an der Signalauswerteeinheit an, so daß der Temperaturwert und der sich daraus ergebende Methangehalt in dem Gas bei der Auswertung der Meßsignale des Ionisationssensors berücksichtigt werden können.

Zweckmäßigerweise sind in der Signalauswerteeinheit Kennfelder für die Luftzahl abhängig von dem Meßsignal des Ionisationssensors für einen Betrieb des Brenners bei unterschiedlicher Last abgelegt. Ebenfalls können alternativ oder zusätzlich Kennfelder für unterschiedliche Wasserstoffumsätze in der bzw. den Brennstoffzellen vorgesehen sein. Auch ist es zweckmäßig, in der Signalauswerteeinheit Kennfelder für die Luftzahl abhängig von dem Meßsignal des Ionisationssensors für unterschiedliche Arten des verwendeten Brenngases vorzusehen, zweckmäßigerweise wird Erdgas als Brenngas eingesetzt.

Bevorzugt ist der Brenner als ein Flächenbrenner vorgesehen, bei dem die Flamme beispielsweise durch ein Gewebe bzw. durch ein Metallgewebe-Vlies hindurchtritt. Diese Brenner besitzen einen großen zulässigen Lambda-Bereich, ohne daß eine Instabilität der Flamme auftritt.

Eine bevorzugte Ausführungsform des Brennstoffzellenheizgeräts wird nachfolgend in einem vereinfachten Blockschaltbild dargestellt.

Es zeigt:
- Fig. 1: eine schematische Blockansicht des Brennstoffzellenheizgeräts,
- Fig. 2: das Ionisationssignal in Abhängigkeit von der Luftzahl Lambda,
- Fig. 3: das Ionisationssignal in Abhängigkeit vom Methangehalt und
- Fig. 4: den Ionisationsstrom in Abhängigkeit von einer Brenngasmenge.

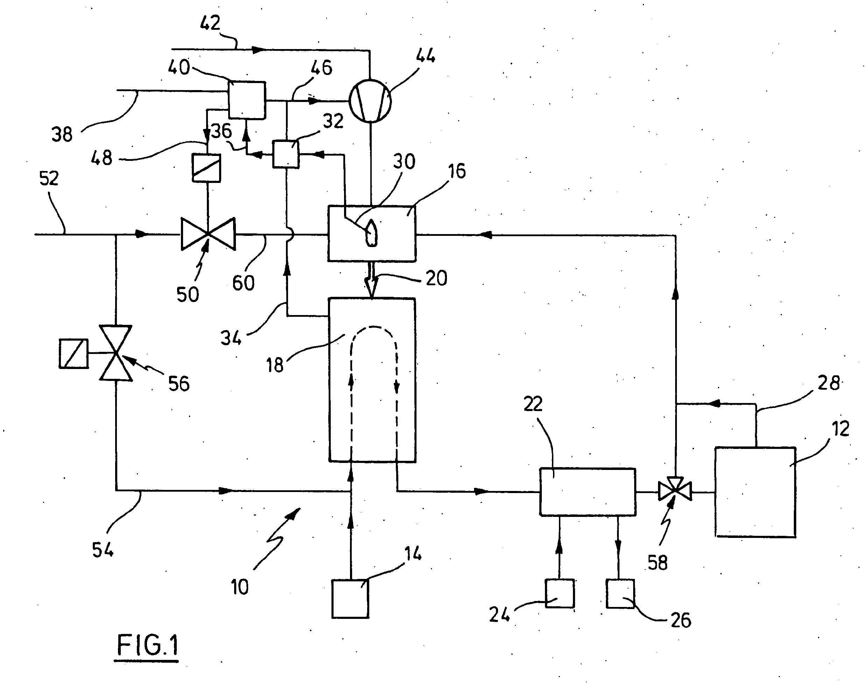

Fig. 1 zeigt eine schematische Blockansicht eines Brennstoffzellenheizgeräts 10, das durch den Umsatz von H₂ in einer Brennstoffzelle 12 elektrischen Strom erzeugt. Bei der Umwandlung entsteht zusätzlich Wärme, die für eine weitere Nutzung zur Verfügung steht. Der für die Brennstoffzelle 12 benötigte Wasserstoff wird aus Erdgas gewonnen. In einem Dampfreformer wird Erdgas unter Zuführung von flüssigem Wasser 14 bei Temperaturen von 500 °C bis 800 °C in ein wasserstoffreiches Reformat umgewandelt. Das wasserstoffreiche Reformat wird üblicherweise als Gas 2 bezeichnet und besitzt beispielsweise die folgende Zusammensetzung:

| Gasbestandteile | (%) |
|---|---|
| H₂ | 74,81 |
| CH₄ | 0,56 |
| C₂H₆ | 0,00 |
| C₃H₈ | 0,00 |
| C₄H₁₀ | 0,00 |
| CO | 0,00 |
| CO₂ | 19,72 |
| N₂-Prox | 4,91 |
| N₂-Anode | 0,00 |

Für die Bereitstellung der Prozeßwärme im Reformer wird ein Brenner 16 verwendet. Dieser Brenner kann als integraler Bestandteil des Reformers 18 oder als eigenständige Komponente ausgeführt sein. Fig. 1 zeigt die vom Brenner 16 in den Reformer übertragene Wärmemenge 20.

Bei der Reformierung erfolgt keine vollständige Umsetzung von Erdgas in H₂ und CO₂, vielmehr bildet sich als Zwischenprodukt auch Kohlenmonoxid. Da Kohlenmonoxid am Katalysator der Brennstoffzelle 12 zur Vergiftungserscheinungen führt, wird in mehreren nachgeschalteten Prozeßstufen der Kohlenmonoxidgehalt schrittweise reduziert, indem eine Umsetzung zu Kohlendioxid erfolgt. Diese Prozeßstufen werden auch als Shift-Stufen bezeichnet, wobei unter zusätzlicher Bildung von H₂ der CO-Gehalt auf unter 1 % reduziert werden kann. In einer Gasfeinreinigung 22, die auch als selektive Oxidation (Selox) oder als Preferential Oxidation (PrOx) bezeichnet wird, wird unter Zugabe von Luftsauerstoff 24 der verbleibende CO-Gehalt auf einen für den Katalysator unschädlichen Bereich reduziert, der im Bereich von wenigen ppm liegt. Bei der selektiven Oxidation, die bei ungefähr 100 °C erfolgt, tritt Wasser als Produkt aus und wird an 26 abgeführt. Die so gewonnene Gasqualität kann der Brennstoffzelle 12 zugefügt werden, ohne daß die Gefahr einer Degeneration des Katalysators besteht.

In Brennstoffzellen wird, unter Freisetzung von Wärme, Wasserstoff in elektrische Energie umgewandelt (nicht dargestellt). Dieser Umsatz wird auch als Wasserstoffumsatz bezeichnet und hängt von der konstruktiven Ausgestaltung der Brennstoffzelle ab. Das in der Brennstoffzelle nicht umgesetzte Reformat verläßt über Leitung 28 anodenseitig die Brennstoffzelle 12. Das nicht umgesetzte Reformat wird als Gas 3 bezeichnet und besitzt im wesentlichen die nachfolgend angegebene Zusammensetzung.

| Gasbestandteile | (%) |
|---|---|
| H₂ | 52,73 |
| CH₄ | 0,99 |
| C₂H₆ | 0,00 |
| C₃H₈ | 0,00 |
| C₄H₁₀ | 0,00 |
| CO | 0,00 |
| CO₂ | 34,76 |
| N₂-Prox | 8,64 |
| N₂-Anode | 2,88 |

Das Gas 3 wird zur thermischen Verwertung dem Reformerbrenner 16 wieder zugeführt. Der Gasweg von einem Gasanschluß über Reformer, PrOx-Stufe und eventuell über die Brennstoffzelle wird als Gasaufbereitung bezeichnet.

In dem Reformerbrenner 16 ist ein Ionisationssensor 30 vorgesehen, der eine Ionisationselektrode im Flammenbereich besitzt. Der über die Elektrode 30 fließende Ionisationsstrom liegt an einer Signalauswerteeinheit 32 an. An der Signalauswerteeinheit liegt ebenfalls ein am Reformer 18 gemessener Temperaturwert 34 an. Die Signalauswerteeinheit 32 bestimmt aus den eingehenden Eingangsgrößen, von denen lediglich der Ionisationsstrom und die Reformertemperatur 34 in Fig. 1 beispielhaft dargestellt sind, einen Lambda-Ist-Wert für das Luft-/Gasgemisch im Brenner 16.

Eine Regelungseinheit 38 bestimmt aus dem eingehenden Ist-Wert 36 und einem von einer Steuereinheit (nicht dargestellt) vorgegebenen Soll-Wert 38 Stellgrößen für die Luft- und Gaszufuhr. Die Luftzufuhr erfolgt über den Luftkanal 42, wobei das Stellsignal 46 ein Gebläse 44 in dem Luftkanal 42 ansteuert. Das Stellsignal 48 steuert ein Ventil 50 in der Gaszufuhr 52 für den Brenner 16 an.

Das Gasaufbereitungssystem durchläuft verschiedene Betriebszustände. In der Startphase des Systems, in der ein Aufwärmen des Reformers und der Shiftstufen erfolgt, wird der Brenner 16 mit reinem Erdgas versorgt, um das System aufzuwärmen. Die Aufwärmphase wird solange beibehalten, bis der Reformer 18 eine Temperatur erreicht hat, ab der Wasser 14 dem Reformer 18 zugegeben werden kann, ohne daß die Gefahr eines Auskondensierens besteht.

Nachdem die Startphase des Systems und das Aufwärmen des Reformers abgeschlossen ist, wird Wasser 14 und Prozeßgas über die Gasleitung 54 dem Reformer 18 zugegeben. Das Ventil 56 wird entsprechend angesteuert. Das im Reformer gebildete Reformat verdrängt das bis dahin im Reformer befindliche Inertgas und führt das Inertgas über die Proxstufe 22 und des Dreiwegeventils 58 dem Brenner 16 zu. Das Dreiwegeventil 58 wird hierbei so gestellt, daß kein Gas in die Brennstoffzelle 12 eintritt, sondern das aus dem Reformer 18 verdrängte Gas dem Brenner 16 zugeführt wird. Am Brenner tritt folglich durch die Zuleitung des Inertgases eine Verdünnung auf, die wie eine Veränderung der Luftzahl wahrgenommen wird.

Die Versorgung des Brenners mit Gas 1 über Leitung 52, Ventil 50 und Leitung 60 bleibt während des Verdrängungsvorgangs erhalten, bis das Inertgas verdrängt wurde und nur noch Reformat dem Brenner zugeführt wird.

Bei vollständiger Verdrängung des Inertgases wird dem Brenner Reformat zur Verfügung gestellt. Die Gaszusammensetzung ist dabei abhängig von der Reformertemperatur. Der Brenner wird solange mit Gas 2 versorgt, bis die Gasqualität sich auf einem Niveau befindet, um der Brennstoffzelle zugeführt zu werden. Dieser Zeitraum kann sich von wenigen Sekunden bis mehreren Minuten erstrecken, es ist aber auch möglich das Reformat sofort an die Brennstoffzelle zu leiten.

Sobald Gas 2 die erforderliche Qualität erreicht hat, wird das Dreiwegeventil 58 gestellt, um es der Brennstoffzelle 12 zuzuführen. Auch in der Brennstoffzelle befindet sich wie bei dem Reformer 18 aus Sicherheitsgründen zunächst Inertgas. Dieses muß ebenfalls vom Reformat verdrängt werden und wird über die Leitung 28 dem Brenner 16 zugeführt. Während dieser Verdrängung wird der Brenner weiter mit Gas 1 über die Leitung 52, das Ventil 50 und die Leitung 60 versorgt, damit ein Abreißen der Flamme verhindert wird.

Nach dem Verdrängen des Inertgases aus der Brennstoffzelle 12 kann durch Umsetzen von H₂ mit dieser Strom erzeugt werden. Da die Brennstoffzelle nur einen Teil des H₂ in Strom umsetzt, steht an der Anode Gas 3 zur Verfügung. Im normalen Betriebszustand wird der Wärmebedarf des Reformers 18 mit dem Gas 3 gedeckt, das über die Leitung 28 dem Brenner 16 zugeführt wird. Hierbei ist dann die Gaszufuhr 50 geschlossen. Der Umsatzgrad von H₂ in der Brennstoffzelle wird auch als Fuel Utilisation (FU) bezeichnet und kann üblicherweise im Bereich zwischen 60 % und 100 % liegen. Bei einem bestimmten Umsetzungsgrad steht dem Brenner 16 noch genügend Gas 3 zur Verfügung, um den Wärmebedarf des Reformers 18 zu decken. Dagegen ist bei einer hohen Wasserstoffumsetzung der Energiegehalt von Gas 3 zu gering, um den Reformerprozeß mit ausreichender Wärme zu versorgen. In diesem Fall wird dem Brenner zusätzlich Gas 1 zugeführt. Dabei kann die Reformertemperatur als Regelgröße für die zusätzliche Gasmenge von Gas 1 genutzt werden.

Für den einwandfreien Betrieb der Brennstoffzelle muß eine Mindestgasqualität gewährleistet werden. Wird dieser Wert überschritten, muß der Reformatfluß von der Zelle weg geschaltet werden. Dieser Wechsel beim Überschreiten eines CO-Werts erfolgt innerhalb der Schaltzeit der entsprechenden Ventile, beispielsweise 58, findet also ohne Übergang statt. Bei jedem anderen kurzzeitigen Störfall, wie er beispielsweise durch einen Lastabwurf oder dergleichen auftritt, wird analog das gesamte produzierte Reformat an der Brennstoffzelle vorbei auf den Brenner geführt.

Der Reformerbrenner wird während der verschiedenen Betriebsphasen mit unterschiedlichen Brenngasen versorgt, welche plötzlich wechseln können oder kontinuierlich ineinander übergehen. Ebenfalls kann dem Brenner reines Erdgas verschiedener Qualität ebenso zugeführt werden, wie wasserstoffreiches Reformat mit unterschiedlichen Anteilen von H₂CH₄, CO₂ und N₂.

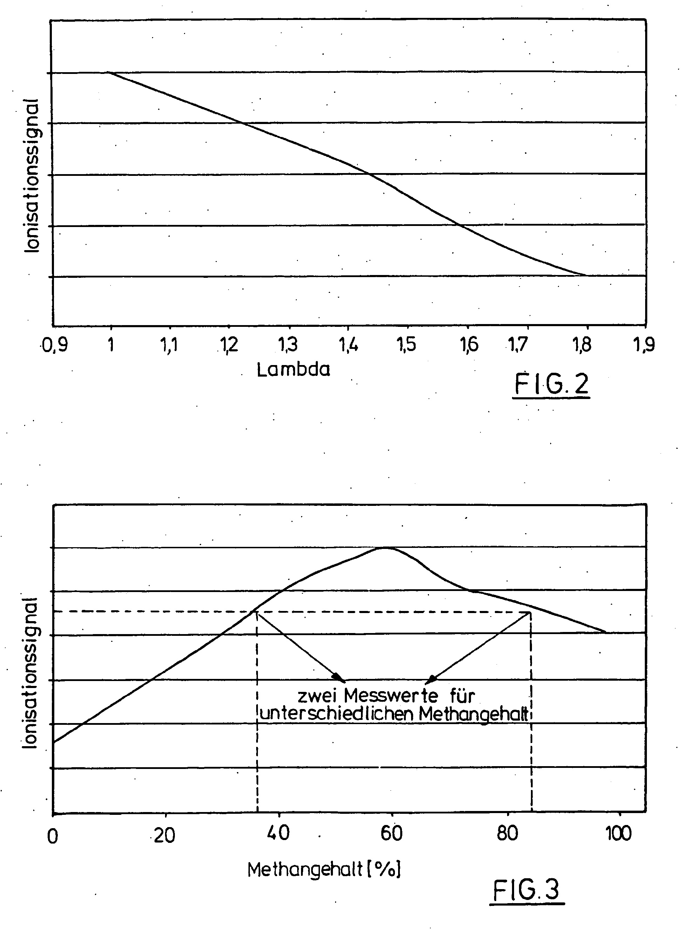

Für jedes Brenngas bzw. Gaszusammensetzung, welches dem Brenner zugeführt wird, ist jeweils eine Luftzahl einzustellen, welche eine vollständige und saubere Verbrennung sicherstellt. Zur Überwachung der Luftzahl wird der Ionisationssensor 30 eingesetzt. Dessen Ausgangssignal zeigt eine charakteristische Veränderung in der Luftzahl. Für den reinen Erdgasbetrieb ergibt sich ein einfacher Zusammenhang für die Höhe des Signals und die Luftzahl, der in Fig. 2 beispielhaft dargestellt ist. Bei der Verwendung von Brenngas mit unterschiedlichen Zusammensetzungen ändert sich das Ionisationssignal zusätzlich im Zusammenhang mit dem Methangehalt. Dieser Verlauf verhindert eine eindeutige Zuordnung eines bestimmten Lambda-Werts (vgl. Fig. 3). So kann das Signal bei verschiedenen Laststufen und unterschiedlichem Methangehalt durchaus identische Werte aufweisen. Um eine eindeutige Zuordnung des Signals vornehmen zu können, werden gemäß der Erfindung zusätzliche Randbedingungen berücksichtigt.

Die Reformertemperatur ist hierbei maßgeblich bestimmend für den Umsatzgrad an Methan. Aus dem Umsatzgrad läßt sich im Umkehrschluß der Restmethangehalt bestimmen, so daß die Abhängigkeit dieses Restmethangehalts von der Reformertemperatur mit hinreichender Genauigkeit eine eindeutig Auflösung der Luftzahl erlaubt.

Zur Gasfeinreinigung des Reformats wird bei der selektiven Oxidation 22 dem Reformat Luft-Sauerstoff 24 zugeführt. An einem Katalysator wird das unerwünschte CO mit Luft-Sauerstoff zu H₂O 26 und CO₂ abreagiert. Die Reaktionsedukte und der verbleibende Luft-Stickstoff verdünnen das Reformat, wodurch sich u.a. auch eine prozentuale Restmethangehaltverschiebung ergibt. Durch die genaue Kenntnis der Prox-Luftmenge kann dieser Verdünnungseffekt bei der Auswertung des Ionisationssignals mit berücksichtigt werden.

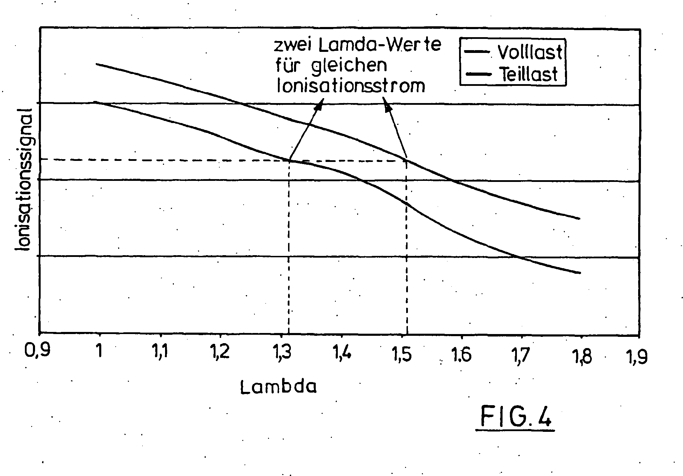

Neben dem prozentualen Methangehalt im Brenngas hat auch die absolute Brenngasmenge einen Einfluß auf die Höhe des Ionisationssignals, wie in Fig. 4 für einen Vollastbetrieb und einen Teillastbetrieb des Brenners 16 beispielhaft dargestellt ist. Über die Auswertung der zugeführten Prozeßgasmenge kann ermittelt werden, wieviel Reformat erzeugt wird. Aus der Stromproduktion der Brennstoffzelle läßt sich dann rechnerisch in Kombination mit der angebotenen Reformatmenge die zu erwartende Brenngasmenge ermitteln, so daß wieder eine eindeutige Auflösung des Ionisationssignals zu genau einem Lambda-Wert möglich ist.

## Patentansprüche

1. Verfahren zur Bestimmung einer Luftzahl bei einem Brenner für ein Brennstoffzellenheizgerät, der einen Ionisationssensor (30) im Flammbereich aufweist und dem zwei unterschiedliche Gase zur Verbrennung zugeführt werden, von denen ein Gas aus einer Gasaufbereitung stammt, **dadurch gekennzeichnet, daß** ein Meßsignal des Ionisationssensors (30) abhängig von einer oder mehreren Zustandsgrößen (34) der Gasaufbereitung in einen Ist-Wert (36) für die Luftzahl umgewandelt wird und abhängig von dem Ist-Wert für die Luftzahl eine Regelung des Luft-Gasgemisches in dem Brenner erfolgt.

2. Verfahren nach Anspruch 1, **dadurch gekennzeichnet, daß** als Zustandsgröße zur Ermittlung des Ist-Werts der Luftzahl die Zusammensetzung des Gases aus der Gasaufbereitung berücksichtigt wird.

3. Verfahren nach einem der Ansprüche 1 oder 2, **dadurch gekennzeichnet, daß** als Zustandsgröße der Methangehalt des Gases aus der Gasaufbereitung berücksichtigt wird.

4. Verfahren nach Anspruch 3, **dadurch gekennzeichnet, daß** der Methangehalt abhängig von der Temperatur eines Reformers (18) und/oder der Prozeßgasmenge bestimmt wird.

5. Verfahren nach einem der Ansprüche 1 bis 4, **dadurch gekennzeichnet, daß** als Zustandsgröße der N2-Anteil des Gases aus einer Gasfeinreinigung (22) bestimmt wird.

6. Verfahren nach einem der Ansprüche 1 bis 5, **dadurch gekennzeichnet, daß** bei der Bestimmung des Ist-Werts für die Luftzahl die zu erwartende Gasmenge des Gases aus der Gasaufbereitung berücksichtigt wird.

7. Verfahren nach einem der Ansprüche 1 bis 6, **dadurch gekennzeichnet, daß** als Zustandsgröße der Wasserstoffumsatz in der Brennstoffzelle berücksichtigt wird.

8. Brennstoffzellenheizgerät mit einem Brenner, der einen Ionisationssensor (30) im Flammenbereich aufweist und dem zwei unterschiedliche Gases zur Verbrennung zugeführt werden, von denen ein Gas aus einer Gasaufbereitung stammt, **dadurch gekennzeichnet, daß** eine Signalauswerteeinheit (32) vorgesehen ist, die das Meßsignal des Ionisationssensors (30) auswertet und einen Ist-Wert für die Luftzahl ermittelt, wobei an der Signalauswerteeinheit (32) Signale (34) einer oder mehrerer Zustandsgrößen der Gasaufbereitungseinrichtung anliegen und das Meßsignal des Ionisationssensors (30) abhängig von der einen oder den mehreren Zustandsgrößen der Gasaufbereitungseinrichtung in einen Ist-Wert für die Luftzahl umgewandelt wird, und eine Regelungseinheit vorgesehen ist, die abhängig von dem so ermittelten Ist-Wert für die Luftzahl eine der Verbrennung zugeführte Luftmenge und/öder eine zugeführte Gasmenge einstellt.

9. Brennstoffzellenheizgerät nach Anspruch 8, **dadurch gekennzeichnet, daß** in einem Reformer (18) mindestens ein Temperatursensor zur Bestimmung eines Methangehalts in dem Gas aus der Gasaufbereitung vorgesehen ist.

10. Brennstoffzellenheizgerät nach einern der Ansprüche 8 oder 9, **dadurch** gekennzeichner, daß in der Auswerteeinheit (32) Kennfelder für die Luftzahl abhängig von dem Meßsignal des Ionisationssensors für unterschiedliche Lasten des Brenners abgelegt sind.

11. Brennstoffzellenheizgerät nach einem der Ansprüche 8 bis 10, **dadurch gekennzeichnet, daß** in der Auswerteeinheit Kennfelder für die Luftzahl abhängig von dem Meßsignal des Ionisationssensors für unterschiedliche Methangehalte des Gases abgelegt sind.

12. Brennstoffzellenheizgerät nach einem der Ansprüche 8 bis 11, **dadurch gekennzeichnet, daß** in der Auswerteeinheit (32) Kennfelder für die Luftzahl abhängig von dem Meßsignal des Ionisationssensors für unterschiedliche Wasserstoffumsätze in der Brennstoffzelle abgelegt sind.

13. Brennstoffzellenheizgerät nach einem der Ansprüche 8 bis 12, **dadurch gekennzeichnet, daß** in der Auswerteeinheit (32) Kennfelder für die Luftzahl abhängig von einem Meßsignal des Ionisationssensors abhängig von einer Art des verwendeten Erdgases abgelegt ist.

14. Brennstoffzellenheizgerät nach einem der Ansprüche 8 bis 13, **dadurch gekennzeichnet, daß** als Brenner ein Flächenbrenner vorgesehen ist.

## Claims

1. A method for determining an air ratio in a burner for a fuel cell heater having an ionization sensor (30) in the range of the flame and which is fed with two different gases for combustion, one of said gases coming from a gas treatment, **characterized in that** a measurement signal of the ionization sensor (30) is converted into an actual value (36) for the air ratio depending on one or more variable/s of states (34) of the gas treatment and that a regulation of the air/fuel mixture in the burner occurs depending on the actual value for the air ratio.

2. The method according to claim 1, **characterized in that** the composition of the gas from the gas treatment is considered as a variable of states in determining the actual value of the air ratio.

3. The method according to any one of claims 1 or 2, **characterized in that** the methane content of the gas from the gas treatment is considered as a variable of states.

4. The method according to claim 3, **characterized in that** the methane content is determined depending on the temperature of a reformer (18) and/or the volume of process gas.

5. The method according to any one of claims 1 to 4, **characterized in that** the N₂ content of the gas from a gas purification (22) is determined as a variable of states.

6. The method according to any one of claims 1 to 5, **characterized in that** the expected volume of gas for the gas from the gas treatment is considered in determining the actual value for the air ratio.

7. The method according to any one of claims 1 to 6, **characterized in that** the hydrogen conversion in the fuel cell is considered as a variable of states.

8. A fuel cell heater with a burner having an ionization sensor (30) in the range of the flame and which is fed with two different gases for combustion, one of said gases coming from a gas treatment, **characterized in that** a signal evaluation unit (32) is provided which evaluates the measurement signal of the ionization sensor (30) and ascertains an actual value for the air ratio, wherein signals (34) are applied to the signal evaluation unit (32) for one or a plurality of variable/s of states for the gas treatment unit and the measurement signal of the ionization sensor (30) is converted into an actual value for the air ratio depending on one or more variable/s of states of the gas treatment unit, and a regulating unit is provided which adjusts a volume of air and/or a volume of gas supplied for combustion depending on the actual value thus determined for the air ratio.

9. The fuel cell heater according to claim 8, **characterized in that** at least one temperature sensor is provided in a reformer (18) for determining a methane content in the gas from the gas treatment.

10. The fuel cell heater according to any one of claims 8 or 9, **characterized in that** characteristic maps for the air ratio depending on the measurement signal of the ionization sensor for different loads of the burner are stored in the evaluation unit (32).

11. The fuel cell heater according to any one of claims 8 to 10, **characterized in that** characteristic maps for the air ratio depending on the measurement signal of the ionization sensor for differing gas methane contents are stored in the evaluation unit.

12. The fuel cell heater according to any one of claims 8 to 11, **characterized in that** characteristic maps for the air ratio depending on the measurement signal of the ionization sensor for different hydrogen conversions in the fuel cell are stored in the evaluation unit (32).

13. The fuel cell heater according to any one of claims 8 to 12, **characterized in that** characteristic maps for the air ratio depending on the measurement signal of the ionization sensor depending on the type of natural gas used are stored in the evaluation unit (32).

14. The fuel cell heater according to any one of claims 8 to 13, **characterized in that** a duct burner is provided as the burner.

## Revendications

1. Procédé de détermination d'un coefficient d'air sur un brûleur d'un dispositif de chauffage de pile à combustible, qui présente un capteur d'ionisation (30) dans la zone de flamme et dans lequel sont acheminés deux gaz différents pour la combustion, dont un gaz provient d'un traitement du gaz, **caractérisé en ce qu'**un signal de mesure du capteur d'ionisation (30) est transformé en fonction d'une ou plusieurs variables d'état (34) du traitement du gaz en une valeur réelle (36) pour le coefficient d'air et un réglage du mélange gaz/air a lieu dans le brûleur en fonction de la valeur réelle pour le coefficient d'air.

2. Procédé selon la revendication 1, **caractérisé en ce que** la composition du gaz provenant du traitement du gaz est prise en compte en tant que variable d'état pour la détermination de la valeur réelle du coefficient d'air.

3. Procédé selon l'une des revendications 1 ou 2, **caractérisé en ce que** la teneur en méthane du gaz provenant du traitement du gaz est prise en compte en tant que variable d'état.

4. Procédé selon la revendication 3, **caractérisé en ce que** la teneur en méthane est déterminée en fonction de la température d'un reformeur (18) et/ou de la quantité de gaz de traitement.

5. Procédé selon l'une des revendications 1 à 4, **caractérisé en ce que** le taux de N₂ du gaz provenant d'une épuration fine du gaz (22) est déterminé en tant que variable d'état.

6. Procédé selon l'une des revendications 1 à 5, **caractérisé en ce que** lors de la détermination de la valeur réelle pour le coefficient d'air, la quantité de gaz escomptée du gaz provenant du traitement du gaz est prise en compte.

7. Procédé selon l'une des revendications 1 à 6, **caractérisé en ce que** le taux de conversion d'hydrogène dans la pile à combustible est pris en compte en tant que variable d'état.

8. Dispositif de chauffage de pile à combustible avec un brûleur, qui présente un capteur d'ionisation (30) dans la zone de flamme et dans lequel deux gaz différents sont acheminés pour la combustion, dont un gaz provient d'un traitement du gaz, **caractérisé en ce qu'**est prévue une unité d'évaluation des signaux (32) qui évalue le signal de mesure du capteur d'ionisation (30) et détermine une valeur réelle pour le coefficient d'air, dans lequel des signaux (34) d'une ou plusieurs variable(s) d'état du dispositif de traitement du gaz sont appliqués à l'unité d'évaluation des signaux (32) et le signal de mesure du capteur d'ionisation (30) est transformé en une valeur réelle pour le coefficient d'air en fonction de la ou des plusieurs variable(s) d'état du dispositif de traitement du gaz, et une unité de réglage est prévue, qui règle en fonction de la valeur réelle déterminée de cette manière pour le coefficient d'air une quantité d'air acheminée pour la combustion et/ou une quantité de gaz acheminée.

9. Dispositif de chauffage de pile à combustible selon la revendication 8, **caractérisé en ce que** dans un reformeur (18) au moins un capteur de température pour la détermination d'une teneur en méthane dans le gaz provenant du traitement du gaz est prévu.

10. Dispositif de chauffage de pile à combustible selon l'une des revendications 8 ou 9, **caractérisé en ce que** des diagrammes caractéristiques pour le coefficient d'air en fonction du signal de mesure du capteur d'ionisation pour différentes charges du brûleur sont stockés dans l'unité d'évaluation (32).

11. Dispositif de chauffage de pile à combustible selon l'une des revendications 8 à 10, **caractérisé en ce que** des diagrammes caractéristiques pour le coefficient d'air en fonction du signal de mesure du capteur d'ionisation pour différentes teneurs en méthane du gaz sont stockés dans l'unité d'évaluation.

12. Dispositif de chauffage de pile à combustible selon l'une des revendications 8 à 11, **caractérisé en ce que** des diagrammes caractéristiques pour le coefficient d'air en fonction du signal de mesure du capteur d'ionisation pour différents taux de conversion d'hydrogène dans la pile à combustible sont stockés dans l'unité d'évaluation (32).

13. Dispositif de chauffage de pile à combustible selon l'une des revendications 8 à 12, **caractérisé en ce que** des diagrammes caractéristiques pour le coefficient d'air en fonction d'un signal de mesure du capteur d'ionisation en fonction d'un type de gaz naturel utilisé sont stockés dans l'unité d'évaluation (32).

14. Dispositif de chauffage de pile à combustible selon l'une des revendications 8 à 13, **caractérisé en ce qu'**un brûleur radiant est prévu en tant que brûleur.
